# EUROPEAN PATENT APPLICATION

(11) **EP 1 405 589 A1**
(43) Date of publication of application: **07.04.2004**
(21) Application number: 03021961.2
(22) Date of filing: 30.09.2003
(51) Int. Cl.: A47J 37/07, A47J 39/02

(54) **Grill furniture with wheels**

(30) Priority: 04.10.2002 DK 200200305
(71) Applicant: Hwam Heat Design AS, 8362 Horning (DK)
(72) Inventor: Thomsen, Henrik Sörig, 8000 Arhus C (DK); Jacobsen, Tobias, 2200 Köbenhavn N (DK)
(74) Representative: Gregersen, Niels Henrik

(57) **Abstract**

There is disclosed a grill furniture (2) with wheels (14) comprising a grill (8) with cover (20) and a storage furniture and a cutting board (26), where said storage furniture consist of a cupboard (4) with a number of shelves (24) and at least one cupboard door (6), and where said grill (8) is suspended on the cupboard (4), preferably at a rear side thereof, in such a manner, that the grill (8) and the cupboard (4) have a common wall part (12). Preferably, said grill consists of a ball grill (8), that means that said common wall part (12) of the grill (8) and the cupboard (4) is spherical. The common wall part is heated by direct radiation effect either of the burning charcoal or by a gas burner of a gas heated grill, so that the part of the cupboard, where said common wall part is situated, may be utilized as an oven or a warming cupboard for keeping food warm or for preheating of plates etc.

## Description

### Field of Invention

The present invention relates to grill furniture with wheels and of the type as described in the preamble to claim 1.

### Prior Art

A countless number of different grill arrangement are known, where either a charcoal heated or gas heated grill is built together with a form of case furniture with wheels, so that there is established a mobile grill furniture with table plate and shelves for storage of various grill tools, grill spices, plates, cutlery etc.

### Purpose of Invention

The invention has for its purpose to provide new and improved grill furniture of the type introductory mentioned, and which by means of simple provisions makes it possible to obtain quite new advantageous applications of a grill.

### Brief Description of Invention

According to the invention the grill furniture is characterized in, that said storage furniture consist of a cupboard with a number of shelves and at least one cupboard, and that said grill is suspended on the cupboard, preferably at a rear side thereof, in such a manner, that the grill and the cupboard have a common wall part. By means of simple provisions it hereby becomes possible to obtain quite new advantageous applications of a grill. The common wall part is heated by direct radiation effect either of the buming grill coal or of a gas burner of a gas heated grill, so that said part of the cupboard, where the common wall part is situated, may be used as an oven or a warming cupboard for keeping food warm or for preheating of plates etc.

Appropriately, the grill furniture according to the invention is such provided, that its wheels are mounted on opposite side walls of the cupboard, that this in a distance from the grill furthermore is provided with supporting feet or legs, which partly are stretching under the grill, and that this opposite the cupboard is provided with a driving handle.

Preferably, the grill furniture according to the invention is such provided, that said grill consists of a ball grill, that means that said common wall part of the grill and the cupboard is spherical. Hereby is obtained an optimal distribution and utilization in the cupboard of the radiation heat from the common wall part, which is heated by the radiation heat from the charcoal or the gas burner.

The grill furniture according to the invention may furthermore with advantage be such provided, that said common wall part of the grill and the cupboard consists of an upper part of the rear side of the cupboard, and that an upper part of the cupboard in level with said common wall part preferably by means of a shelf is separated from the remaining part of the cupboard. Of course it is of utility advantage that the grill is mounted at the top of the cupboard so that the grill is situated in an optimal working height.

With exceptional advantage the grill furniture according to the invention furthermore may be such provided, that said remaining part of the cupboard has a separate cupboard door and is provided as an insulated refrigerator with an electric refrigerating system. Alternatively, the refrigerator may be adapted for gas operation, which would be most ideal if also the grill is gas heated.

Furthermore it would be an obvious advantage to provide the grill furniture according to the invention in such a manner that one part of the cupboard is adapted to contain a gas bottle, when the grill is gas heated.

The grill furniture according to the invention may be further optimized by, that said cutting board consists of a detachably arranged top plate provided with juice groove along the circumference, said cutting board preferably consists of heat resistant plastic material. With other words the cutting board may be detached for cleaning in a dishwasher.

### Brief Description of Drawing

The invention is described in more details in the following with reference to the drawing, in which:
- Fig. 1: shows a perspective view of an embodiment of grill furniture according to the invention,
- Fig. 2: shows a perspective view of the grill furniture cf. Fig. 1 - seen from another side - and without cover on the grill,
- Fig. 3: shows a further perspective view of the grill furniture cf. Fig. 1 - seen from the front side of cupboard of the grill furniture,
- Fig. 4: shows a still further view of the grill furniture cf. Fig. 1 - seen from the front side of the cupboard of the grill furniture - with open cupboard door,
- Fig. 5: shows a perspective view of another embodiment of grill furniture according to the invention - shown without grill, and
- Fig. 6: shows a perspective view of the grill furniture cf. Fig. 5 and provided with a ball grill.

### Detailed Description of Invention

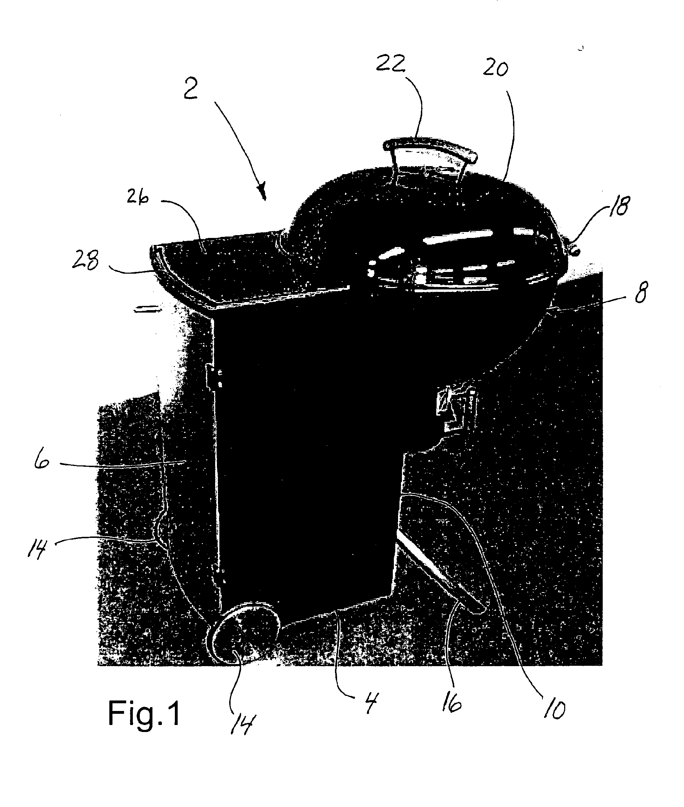

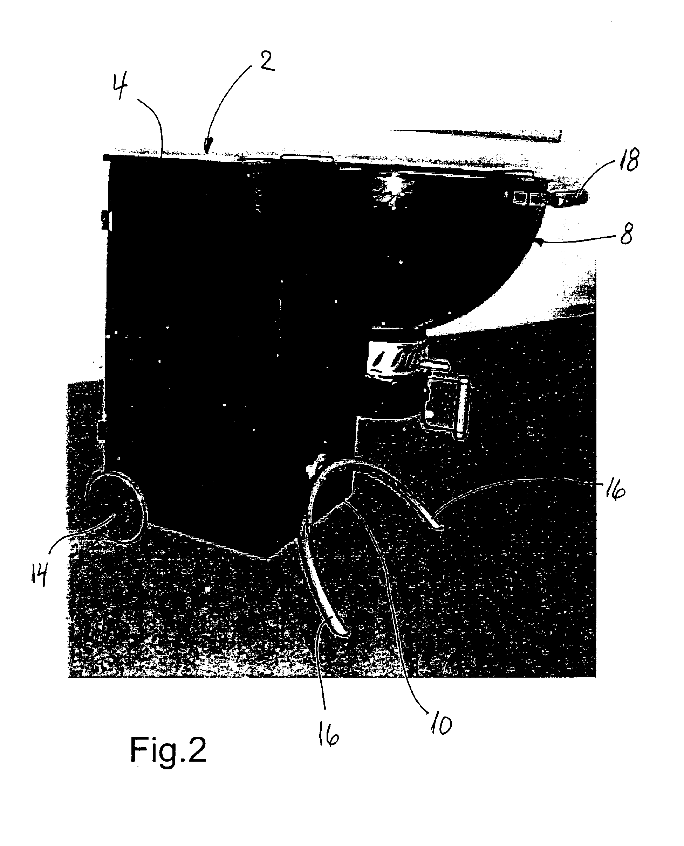

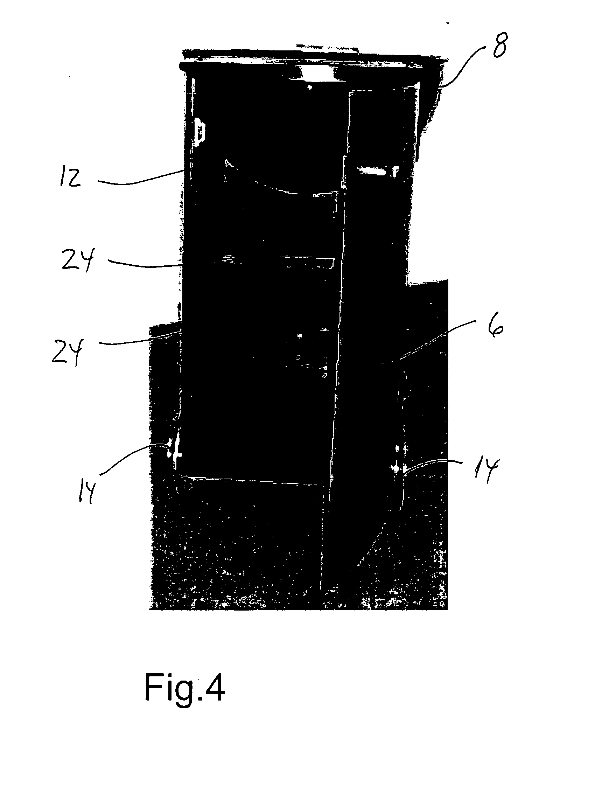

The grill furniture 2 shown in Figs. 1 - 4 consists of a cupboard 4, which by way of example is made from metal plate, and which is provided with a convex, arched cupboard door 6. A ball grill 8 is build-in in a rear side 10 of the cupboard 4 in such a manner, that a spherical wall part 12 (Fig. 4) is common for the ball grill 8 and the cupboard 4. In other word the ball grill 8 is floating "suspended" on the rear side 10 of the cupboard 4, since the ordinary supporting legs of the ball grill 8 is substituted by the cupboard 4.

Near with the front side of the cupboard 4 are at opposite side walls thereof mounted driving wheels 14, and lowermost at the rear side 10 of the cupboard 4 are mounted arched supporting legs 16, which extend under the ball grill 8 in a distance therefrom, and which thereby secure a good and stable support for the mobile grill furniture 2. At the top of the ball grill 8 is mounted a driving handle 18. The ball grill 8 comprises a ordinary hemispherical cover 20 (Fig. 1) with handle 22.

In Fig. 4 where one can see into the open cupboard 4 is seen the common spherical wall part 28, which is heated either by the charcoal or by a gas burner, and which exactly due to its shape gives an optimal good distribution of the radiation heat inside the upper part of the cupboard 4, which furthermore comprises a number of shelves 24.

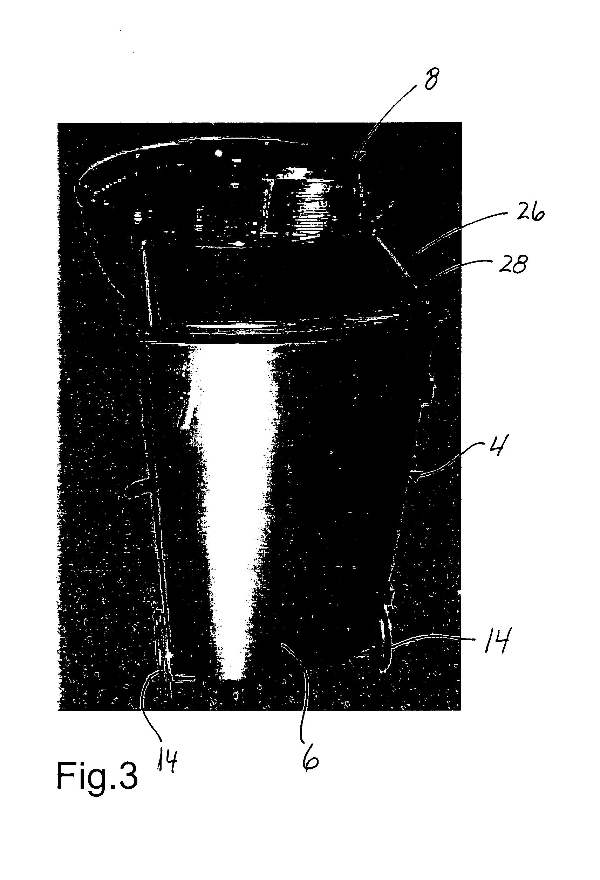

Upwardly the cupboard 4 is provided with a detachable cutting board 26 with juice groove along its circumference (Fig. 3). Preferably, the cutting board 26 is made from cutting proof, heat resistant plastic material, which stands cleaning in dishwasher.

As already mentioned the cupboard may serve different purposes such as preheating of plates, keeping food warm or different storage purposes such as storage of grill tools, grill spices, plates, cutlery, table-cloths, table napkins etc. As also mentioned the lower part of the cupboard 4 may be provided with a separate cupboard door and be provided as a refrigerator for cooling and storage of cool drinks.

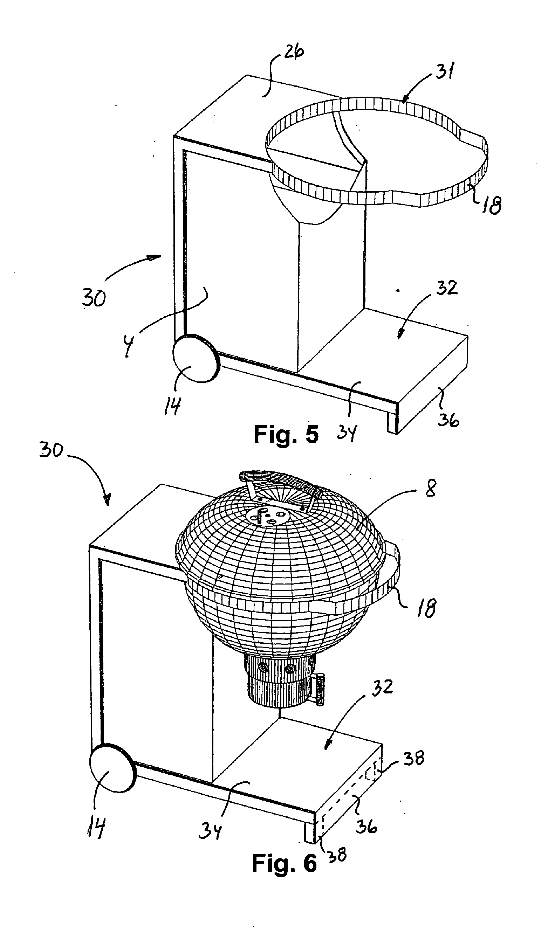

Fig. 5 shows a perspective view of another embodiment of grill furniture 30 according to the invention - shown without grill, and Fig. 6 shows a perspective view of the grill furniture 30 cf. Fig. 5 and provided with a ball grill 8.

As shown in Fig. 5 the grill furniture 30 comprises a ring-shaped supporting structure 31 adapted to support a ball grill 8 as shown in Fig. 6. Said supporting structure 31 is at one side being connected to the grill furniture 30, while said supporting structure 31 opposite the ball grill comprises a handle 28.

The embodiment of the grill furniture 30 shown in Figs. 5 and 6 comprises a support leg structure 32, which is integrated with the bottom of the cupboard 4 in such a manner, that a bottom plate part 34 of the cupboard 4 is stretching under the grill 8 and at an opposite edge is provided with a supporting foot plate 36. In principle this foot plate 36 may by substituted by individual feet 38 (shown with dotted lines in Fig. 6) situated at opposite comers of the support leg structure 32.

## Claims

1. Grill furniture with wheels comprising a grill with cover, storage furniture and a cutting board, ***characterized* in,that** said storage furniture consist of a cupboard with a number of shelves and at least one cupboard door, and that said grill is suspended on the cupboard, preferably at a rear side thereof, in a such manner, that the grill and the cupboard has a common wall part.

2. Grill furniture according to claim 1, ***characterized* in,that** its wheels are mounted on opposite side walls of the cupboard, at this in a distance from the grill furthermore is provided with supporting feet or legs, which partly are stretching under the grill, and that this opposite the cupboard is provided with a driving handle.

3. Grill furniture according to claim *1,* ***characterized* in,that** said grill consists of a ball grill, that means that said common wall part of the grill and the cupboard is spherical.

4. Grill furniture according to claim *1,* ***characterize****d* in,that said common wall part of the grill and the cupboard consists of an upper part of the rear side of the cupboard, and that an upper part of the cupboard in level with said common wall part preferably by means of a shelf is separated from the remaining part of the cupboard.

5. Grill furniture according to claims 1 and 4, ***characterized* in,that** said remaining part of the cupboard has a separate cupboard door and is provided as an insulated refrigerator with an electric refrigerating system.

6. Grill furniture according to claim *1,* ***characterized* in,that** one part of the cupboard is adapted to contain a gas bottle, when the grill is gas heated.

7. Grill furniture according to claim *1,* ***characterized* in,that** said cutting board consists of a detachably arranged top plate provided with juice groove along the circumference, said cutting board preferably consists of heat resistant plastic material.
